# EUROPÄISCHE PATENTSCHRIFT

(11) **EP 1 799 781 B1**
(45) Veröffentlichungstag und Bekanntmachung des Hinweises auf die Patenterteilung: **08.07.2009**
(21) Anmeldenummer: 05776028.2
(22) Anmeldetag: 19.08.2005
(51) Int. Cl.: C09D 11/02, B42D 15/00

(54) **SICHERHEITSMERKMAL FÜR EIN WERT- UND SICHERHEITSDOKUMENT UND ENTSPRECHENDES DOKUMENT**
SECURITY CHARACTERISTIC FOR A VALUABLE DOCUMENT AND A SECURITY DOCUMENT AND CORRESPONDING DOCUMENT
CARACTERISTIQUE DE SECURITE POUR UN DOCUMENT DE VALEUR ET DE SECURITE ET DOCUMENT CORRESPONDANT

(30) Priorität: 27.08.2004 DE 102004041828
(43) Veröffentlichungstag der Anmeldung: 27.06.2007
(73) Patentinhaber: Bundesdruckerei GmbH, 10969 Berlin (DE)
(72) Erfinder: DEMANOWSKI, Hans, 10117 Berlin (DE)
(74) Vertreter: Keil, Rainer A.
(86) Internationale Anmeldenummer: PCT/EP2005/054109
(87) Internationale Veröffentlichungsnummer: WO 2006/021551

(56) Entgegenhaltungen:
- DE-A1- 4 334 847
- US-A- 5 665 429
- US-A- 6 089 614

## Beschreibung

Die Erfindung betrifft ein Sicherheitsmerkmal für ein Wert- und Sicherheitsdokument und ein entsprechendes Wert- und Sicherheitsdokument.

Es sind bereits Sicherheitsmerkmale für ein Wert- und Sicherheitsdokument und entsprechende Dokumente mit einem Sicherheitsmerkmal bekannt, welche mit einer Farbe bedruckt sind, welche Farbteilchen einer Farbe aufweisen. Hierbei entspricht die Farbe, welche bei der Betrachtung im Auflicht erscheint, der Farbe, die auch bei der Betrachtung im Durchlicht wahrgenommen wird. Diese Aufdrucke können als Bilder und/oder Formen und/oder Ziffern- und/oder Buchstabenfolgen gestaltet sein, die Informationen für den Betrachter beinhalten.

Als (Farb-)Teilchen wird nachfolgend ein Kristallit oder ein Kristallitagglomerat bezeichnet, welches bei der visuellen Betrachtung einen Farbton im Auflicht und einen Farbton im Durchlicht aufweist. Die dem Betrachter oder einer maschinellen Messeinrichtung erscheinenden Farbtöne, im Folgenden Farben genannt, entstehen durch Absorptions- und Reflexionsvorgänge des sichtbaren Bereichs des Spektrums der einfallenden oder durchgehenden elektromagnetischen Strahlung in den Kristalliten des Teilchens. Die in einer Farbe oder einer anderen Beschichtung enthaltenen Teilchen bestimmen somit die dem Betrachter oder einer maschinellen Messeinrichtung erscheinende "Farbe" einer Farbe oder der Beschichtung , also den Bereich des sichtbaren elektromagnetischen Spektrums, der vom Dokument in Richtung Betrachter oder maschinelle Messeinrichtung ausgesendet wird. Die Teilchen werden auch als Farbpigmente bezeichnet. Ein Teilchen hat in der Regel einen Durchmesser zwischen 2 µm und 50 µm, je nach dem verwendeten Druckverfahren.

Aus der Druckschrift US 4,941,687 ist ein Sicherheitsdokument mit einem metallisierten Kunststoffstreifen als Sicherheitsmerkmal bekannt. Die Metallisierungen sind in der Form von Zeichen auf die Sicherheitsfarbe aufgebracht und von Farben bedeckt, welche den Farben des Sicherheitsdokuments entsprechen. An den metallisierten Stellen ist der Sicherheitsfaden, wenn er in das Papier des Sicherheitsdokuments eingebracht ist, im Durchlicht nicht transparent. Die Herstellung eines derartigen Sicherheitsmerkmals ist aufwändig. Ein ebenso aufwändig herzustellendes Sicherheitsmerkmal ist aus der Druckschrift DE 692 08 945 T4 bekannt, welches aus einem Sicherheitsfaden besteht, der die gleiche Farbe wie die umgebenden Bereiche des Dokuments aufweist. Der Kunststofffaden wird durch Beschichtung oder Druck mit einer Farbschicht versehen, die in einer Menge aufgebracht wird, so dass die Opazität des Fadens höher ist als diejenige des Blattes, in das der Faden eingezogen ist. Der Faden weist die gleiche oder eine ähnliche Farbe wie das Dokument auf, das den Faden enthält, und ist somit im Auflicht nicht sichtbar. Im Durchlicht ist der Faden bedingt durch die höhere Opazität jedoch sichtbar.

Aus der DE 100 21 896 T2 ist ein bahnförmiges Aufzeichnungsmaterial mit einem Sicherheitsmerkmal bekannt. Das Sicherheitsmerkmal ist als eine pigmentierte Markierung gestaltet, welche zwischen Substrat und Aufzeichnungsschicht angeordnet ist. Die Markierung enthält eine Zwischenschicht, die eine lokal unterschiedliche Dicke aufweist. Das Sicherheitsmerkmal zeigt so im Auflicht die gleiche Farbe und unterschiedliche Transparenz im Durchlicht. Die Herstellung einer derartigen Zwischenschicht führt nur zu befriedigenden Resultaten, wenn die Schichtdickenunterschiede groß sind und die Übergänge zwischen den Bereichen mit unterschiedlicher Schichtdicke steil verlaufen.

Aus der Druckschrift DE 690 01 677 T2 ist ein Wert- und Sicherheitsdokument bekannt, welches ein einfarbiges, im reflektierenden Licht nicht sichtbares und im Durchlicht sichtbares Druckmuster aufweist. Dieses Druckmuster ist zusammengesetzt aus einer ersten Schicht, welche die Opazität des Kunststoffsubstrates modifiziert. Die darüber angeordnete zweite Schicht ist farbig und deckt die erste Schicht ab, so dass die erste Schicht im Auflicht nicht gesehen wird. Der mehrschichtige Aufbau ist jedoch aufgrund des hohen Herstellungs- und Materialaufwands von Nachteil und stellt eine fehleranfällige Lösung dar. Beispielsweise bestehen, da die unterschiedlichen Farbeindrücke durch das Zusammenwirken unterschiedlicher Schichten hervorgerufen werden, hohe Genauigkeitsanforderungen bei der Herstellung. Zudem sind die gestalterischen Möglichkeiten für derartige Dokumente eingeschränkt.

Die Druckschrift US 5,665,429 offenbart verkapselte Teilchen mit einem Kern aus Ruß oder magnetischem Material zur Verwendung in Druckfarben.

Der Erfindung liegt die Aufgabe zugrunde, ein Sicherheitsmerkmal zu schaffen, welches visuell einfach identifizierbar ist und wenig Kosten und Aufwand in der Herstellung benötigt und die vorgenannten Nachteile beseitigt. Weiterhin besteht die Aufgabe darin, ein entsprechendes Wert- und Sicherheitsdokument zu schaffen.

Die Aufgabe wird erfindungsgemäß dadurch gelöst, dass das erfindungsgemäße Sicherheitsmerkmal ersten Teilchen aufweist, die bei der visuellen Betrachtung im Auflicht wenigstens eine beliebige erste Farbe und im Durchlicht eine von der wenigstens einen ersten Farbe abweichende zweite Farbe aufweisen. Die Aufgabe wird außerdem von einem Wert- und Sicherheitsdokument mit einem entsprechenden Sicherheitsmerkmal gelöst.

Das erfindungsgemäße Sicherheitsmerkmal und das erfindungsgemäße Wert- und Sicherheitsdokument haben den Vorteil, dass die Echtheit einfach durch Betrachtung im Wechsel zwischen Durchlicht und Auflicht, gegebenenfalls unter Zuhilfenahme von wenigen, für jedermann zugänglichen Mitteln, z.B. einer im sichtbaren elektromagnetischen Spektrum emittierenden Lampe, nachweisbar ist. Das Sicherheitsmerkmal und das entsprechende Wert- und Sicherheitsdokument lassen sich außerdem einfach und kostengünstig herstellen.

Ein besonders einfach zu verifizierendes Sicherheitsmerkmal wird erzeugt, wenn das erfindungsgemäße Sicherheitsmerkmal erste und zweite Teilchen aufweist, die bei der visuellen Betrachtung im Auflicht wenigstens eine beliebige erste Farbe zeigen, wobei die ersten Teilchen bei der visuellen Betrachtung im Durchlicht mittels subtraktiver Farbmischung eine andere Farbe zeigen als die zweiten Teilchen, wobei mindestens die Farbe der ersten Teilchen im Durchlicht verschieden von ihrer ersten Farbe im Auflicht ist. Hierbei ist es von besonderem Vorteil, wenn die ersten Teilchen und die zweiten Teilchen im Auflicht die gleiche Farbe zeigen. Der farbliche Unterschied der zwischen ersten und zweiten Teilchen erscheint besonders kontrastreich, wenn die ersten Teilchen im Durchlicht schwarz oder grau erscheinen. Vorteilhaft für die sichere Identifizierung von echten und unechten Wert- und Sicherheitsdokumenten ist, wenn die ersten und die zweiten Teilchen auf der Oberfläche eines Trägers angeordnet sind, welcher transparent ist. Ebenso ist es vorteilhaft, die Schicht mit den ersten und den zweiten Teilchen durch eine transparente Schutzschicht abzudecken, so dass diese bei längerem Gebrauch des Wert- und Sicherheitsdokuments nicht abgetragen oder beschädigt wird. Vorteilhaft einfach lassen sich die im Durchlicht schwarz oder grau erscheinenden ersten Teilchen herstellen, indem für diese ein opaker Kern vorgesehen wird, welcher eine Ummantelung mit einer Buntfarbe aufweist. Dieser kann in vorteilhafter Weise aus Ruß bestehen, so dass die Materialkosten vergleichsweise gering sind. Zur eindeutigen Identifizierung der Sicherheitsmerkmale ist von Vorteil, wenn durch eine durch die ersten Teilchen und/oder die zweiten Teilchen ausgebildete Fläche des erfindungsgemäßen Sicherheitsmerkmals bei der visuellen Betrachtung im Durchlicht eine Information in Form von Ziffern- und/oder Buchstabenfolgen und/oder einer Form und/oder eines Bildes dargestellt wird.

Die Erfindung wird nachfolgend anhand eines Ausführungsbeispiels näher erläutert, das anhand von Zeichnungen dargestellt ist. Es zeigen
- Figur 1: ein erfindungsgemäßes Wert- und Sicherheitsdokument mit einem erfindungsgemäßen Sicherheitsmerkmal bei der Betrachtung im Auflicht (schematisch),
- Figur 2: das in Figur 1 dargestellte Wert- und Sicherheitsdokument im Durchlicht (schematisch),
- Figur 3: einen Querschnitt des in den Figuren 1 und 2 dargestellten Wert- und Sicherheitsdokuments (schematisch) und
- Figur 4: ein erstes Teilchen des in den vorangegangenen Figuren dargestellten erfindungsgemäßen Sicherheitsmerkmals.

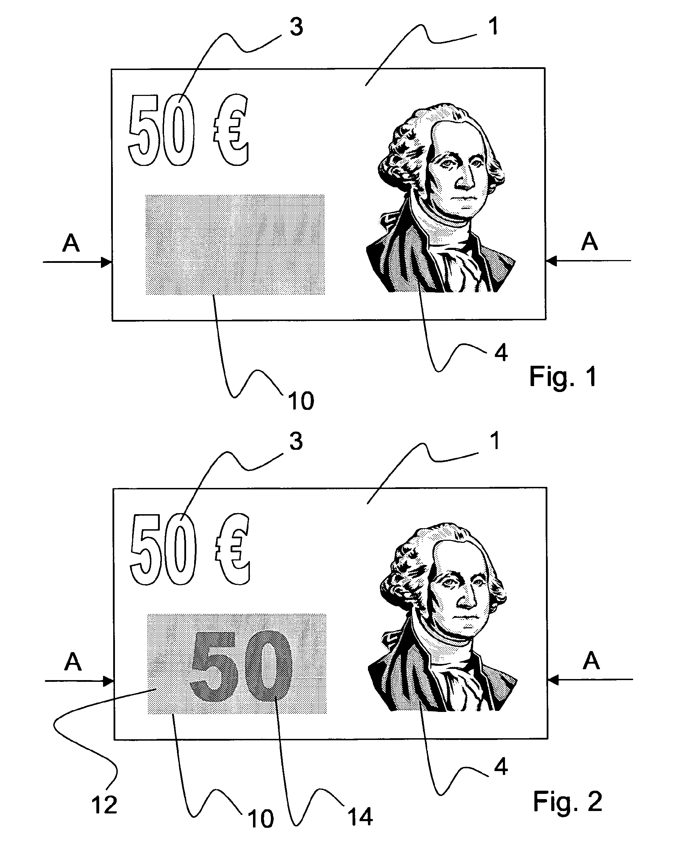

Figur 1 zeigt ein Wert- und Sicherheitsdokument mit verschiedenen Sicherheitsmerkmalen. Mit der Bezeichnung Wert- und Sicherheitsdokument werden Pässe, Ausweise, Scheckkarten, Versicherungskarten, Banknoten, Briefmarken oder andere zusammengefasst. Vorliegend wird die Erfindung anhand einer Banknote 1 erläutert. Die Banknote 1 enthält beispielsweise als Sicherheitsmerkmal 3 den Wert der Banknote in Form eines mit fluoreszierenden und/oder irisierenden Farben ausgeführten Aufdrucks. Als weiteres Sicherheitsmerkmal 4 ist ein Bild einer berühmten Persönlichkeit vorgesehen, welches mittels Stichtiefdruck erzeugt wurde.

Das erfindungsgemäße Sicherheitsmerkmal 10 ist als farbiges Rechteck ausgeführt, welches im Auflicht in einer einheitlichen ersten Farbe erscheint, obwohl dieses aus Bereichen mit zweiten Teilchen 12 und ersten Teilchen 14 (siehe nachfolgende Erläuterung der Figur 2) besteht. Die zweiten Teilchen 12 und die ersten Teilchen 14 haben in dem hier dargestellten Ausführungsbeispiel also die gleiche erste Farbe im Auflicht. Die erste Farbe kann eine beliebige Buntfarbe, beispielsweise rot oder blau sein. Ein Farbunterschied ist zwischen beiden Bereichen im Auflicht nicht erkennbar, die Fläche wirkt einheitlich. Ein Farbunterschied wird durch das menschliche Auge nicht wahrgenommen oder eine maschinelle Messeinrichtung nicht detektiert.

In einem weiteren, nicht dargestellten Ausführungsbeispiel können die zweiten Teilchen 12 und die ersten Teilchen 14 im Auflicht unterschiedliche Farben, vorzugsweise unterschiedliche Buntfarben aufweisen.

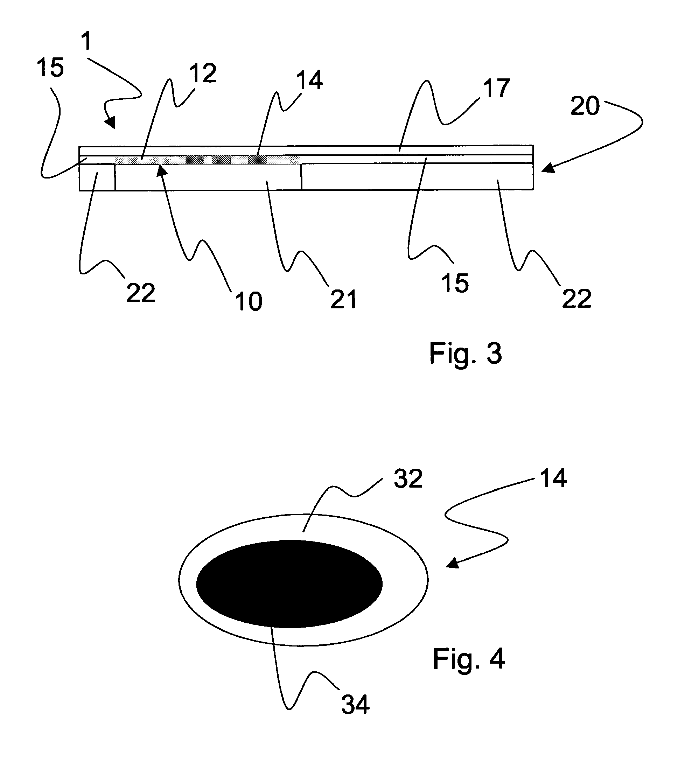

Die in Figur 1 dargestellte Banknote 1 ist in Figur 2 noch einmal so dargestellt, wie sie bei der Betrachtung im Durchlicht erscheinen würde. Im Unterschied zur Betrachtung im Auflicht, die in Figur 1 dargestellt ist, kann der menschliche Betrachter oder die maschinelle Messeinrichtung im Bereich des erfindungsgemäßen Sicherheitsmerkmals 10 nun einen ersten Bereich, der zweite Teilchen 12 enthält, sowie einen zweiten Bereich, der erste Teilchen 14 enthält, unterscheiden. Im Durchlicht weisen die zweiten Teilchen 12 eine andere Farbe als die ersten Teilchen 14 auf. Vorzugsweise behalten die zweiten Teilchen 12 im Durchlicht ihre erste Farbe bei und erscheinen beispielsweise rot oder blau. Die ersten Teilchen 14 zeigen im Durchlicht aufgrund ihres opaken Kerns (siehe die Erläuterungen anhand der nachfolgenden Figur 4) die Farbe dunkelgrau oder schwarz. Durch die farblich unterschiedlichen Bereiche aus zweiten Teilchen 12 und ersten Teilchen 14 wird eine Information dargestellt, welche in dem in Figur 2 dargestellten Ausführungsbeispiel die Zahl "50" ist. Die Zahl "50" tritt, da in diesem Bereich die ersten Teilchen 14 angeordnet sind, mit deutlichem Kontrast aus der noch mit den zweiten Teilchen 12 versehenen Fläche hervor, während sie im Auflicht verborgen war. Die Zahl kennzeichnet in dem hier dargestellten Ausführungsbeispiel den Wert der Banknote 1 und wiederholt eine Information, welche bereits in einem anderen Bereich des Wertdokuments angegeben war, hier einen Teil des bereits mittels einer fluoreszierenden und/oder irisierenden Farbe hergestellten Aufdrucks 3. Die durch die zweiten Teilchen 12 und die ersten Teilchen 14 im Durchlicht dargestellte Information kann durch beliebige andere Zahlen- und/oder Buchstabenfolgen und/oder Bilder und/oder Formen wie Kreisform, Rechteckform, Quadratform oder Sternform realisiert werden.

Figur 3 zeigt einen Querschnitt durch die in den Figuren 1 und 2 dargestellte Banknote 1 entlang der Linie A-A. Die Banknote weist einen in einem Bereich mindestens teiltransparenten Träger 20 auf, welcher einen mindestens teiltransparenten Bereich 21, ein sogenanntes Fenster, und nicht transparente Bereiche 22 enthält. In einem weiteren Ausführungsbeispiel kann die Banknote 1 auch einen Träger 20 aufweisen, welcher vollständig mindestens teiltransparent ist. Der Träger kann aus Kunststoff und/oder Papier bestehen, wobei die mindestens teiltransparenten Bereiche 21 vorzugsweise aus Kunststoff bestehen. Auf der Oberfläche des Trägers 20 ist im Bereich des mindestens teiltransparenten Bereichs 21 das erfindungsgemäße Sicherheitsmerkmal 10 angeordnet, welches zweite Teilchen 12 und erste Teilchen 14 enthält. Das Sicherheitsmerkmal 10 kann mittels Hoch- oder Tiefdruck, Offsetdruck oder anderer Druckverfahren aufgedruckt, aufgespritzt, aufgestrichen oder mittels eines anderen bekannten Beschichtungsverfahrens aufgetragen werden. Neben dem Sicherheitsmerkmal 10 sind weitere Elemente 15 auf dem Träger 20 angeordnet, welche beispielsweise die anhand von Figur 1 erläuterten Sicherheitsmerkmale 3 und 4 enthalten. Die Elemente 15 können ebenfalls aufgedruckt oder mittels eines anderen bekannten Beschichtungsverfahrens aufgebracht worden sein. Die Teile des erfindungsgemäßen Sicherheitsmerkmals 10 mit den zweiten Teilchen 12 und den ersten Teilchen 14 werden vorzugsweise nacheinander aufgetragen. Hierbei wird zunächst in den hierfür vorgesehenen Bereichen die Substanz, z.B. Farbe, mit den zweiten Teilchen 12 in den hierfür vorgesehenen Bereichen aufgebracht und anschließend in den übrigen Bereichen die Substanz mit den ersten Teilchen 14, beispielsweise ebenfalls mittels einer Farbe, aufgetragen. Oberhalb der Schicht aus dem Sicherheitsmerkmal 10 und den Elementen 15 ist eine Schutzschicht 17 angeordnet, welche das darunter liegende Sicherheitsmerkmal 10 und/oder die Elemente 15 abdecken und vor Zerstörung im Gebrauch schützen soll. Die Schutzschicht besteht vorzugsweise aus Kunststoff.

Anhand von Figur 4 soll der Aufbau eines ersten Teilchens erläutert werden. Das erste Teilchen 14 ist in Figur 4 im Querschnitt dargestellt. Es enthält einen opaken Kern 34, welcher von einer farbigen Hülle 32 umgeben ist. Als Kern wird hierbei ein Volumen bezeichnet, das sich vollständig innerhalb des Teilchens befindet. Der Kern 34 kann beispielsweise aus Ruß oder anderen opaken Partikeln bestehen. Dieser beispielsweise rußhaltige Kern absorbiert das durchgehende Licht und lässt so die Bereiche des erfindungsgemäßen Sicherheitsmerkmals 10, welche die ersten Teilchen 14 enthalten, im Durchlicht schwarz oder grau erscheinen. Im Auflicht ist dieses erste Teilchen 14 jedoch aufgrund der farbigen Hülle farbig. Demgegenüber weisen die zweiten Teilchen 12 keinen opaken Kern auf, so dass diese im Auflicht und im Durchlicht farbig erscheinen.

Werden mit den ersten Teilchen in einem weiteren Ausführungsbeispiel Rasterdrucke hergestellt, wobei erste Teilchen mit gelber Ummantelung und opakem Kern, erste Teilchen mit blauer Ummantelung und opakem Kern sowie erste Teilchen mit magentafarbener Ummantelung und opakem Kern anstelle der herkömmlichen Pigmente Yellow, Cyan und Magenta Verwendung finden, so entsteht ein im Auflicht farbiges Bild, welches bei Durchlichtbetrachtung als Schwarz-Weiß-Graustufenbild erscheint.

In einem weiteren Ausführungsbeispiel kann der anhand der Figuren 1 und 2 dargestellte Effekt umgekehrt werden. Im Auflicht wird dann ein Schwarzweißbild wahrgenommen, während im Durchlicht ein Farbeindruck entsteht. Dies kann dadurch realisiert werden, dass die ersten oder die zweiten Teilchen mit einer Licht absorbierenden Oberfläche versehen sind.

## Patentansprüche

1. Sicherheitsmerkmal für ein Wert- und Sicherheitsdokument mit ersten Teilchen, die bei der visuellen Betrachtung im Auflicht wenigstens eine beliebige Farbe und im Durchlicht eine von der wenigstens einen ersten Farbe abweichende zweite Farbe aufweisen, **dadurch gekennzeichnet, dass** das Sicherheitsmerkmal zu den ersten Teilchen zusätzlich zweite Teilchen aufweist, wobei die ersten Teilchen und die zweiten Teilchen bei der visuellen Betrachtung im Auflicht wenigstens eine beliebige Farbe zeigen, und die ersten Teilchen bei der visuellen Betrachtung im Durchlicht eine andere Farbe aufweisen als die zweiten Teilchen im Durchlicht.

2. Sicherheitsmerkmal nach Anspruch 1, **dadurch gekennzeichnet, dass** die ersten Teilchen und die zweiten Teilchen im Auflicht die gleiche erste Farbe zeigen.

3. Sicherheitsmerkmal nach einem der vorhergehenden Ansprüche, **dadurch gekennzeichnet, dass** die ersten Teilchen im Auflicht eine Buntfarbe zeigen.

4. Sicherheitsmerkmal nach einem der vorhergehenden Ansprüche, **dadurch gekennzeichnet, dass** die ersten Teilchen im Durchlicht grau oder schwarz erscheinen.

5. Sicherheitsmerkmal nach einem der Ansprüche 1 bis 4, **dadurch gekennzeichnet, dass** die ersten und die zweiten Teilchen auf der Oberfläche eines Trägers angeordnet sind.

6. Sicherheitsmerkmal nach Anspruch 5, **dadurch gekennzeichnet, dass** der Träger mindestens in einem Bereich mindestens teiltransparent ist.

7. Sicherheitsmerkmal nach einem der Ansprüche 5 oder 6, **dadurch gekennzeichnet, dass** die ersten und die zweiten Teilchen mittels Drucken und/oder Spritzen und/oder Streichen und/oder Beschichten auf den Träger aufgebracht sind.

8. Sicherheitsmerkmal nach einem der Ansprüche 1 bis 7, **dadurch gekennzeichnet, dass** die ersten und die zweiten Teilchen durch eine transparente Schutzschicht abgedeckt sind.

9. Sicherheitsmerkmal nach einem der vorhergehenden Ansprüche, **dadurch gekennzeichnet, dass** die ersten Teilchen einen opaken Kern aufweisen.

10. Sicherheitsmerkmal nach Anspruch 9, **dadurch gekennzeichnet, dass** der opake Kern aus Ruß besteht.

11. Sicherheitsmerkmal nach einem der vorhergehenden Ansprüche, **dadurch gekennzeichnet, dass** durch eine durch die ersten Teilchen oder die ersten und die zweiten Teilchen ausgebildete Fläche des Sicherheitsmerkmals bei der visuellen Betrachtung im Durchlicht eine Information dargestellt wird.

12. Sicherheitsmerkmal nach Anspruch 11, **dadurch gekennzeichnet, dass** die Information eine Buchstaben- und/oder Ziffernfolge und/oder ein Bild und/oder eine Form beinhaltet.

13. Sicherheitsmerkmal nach einem der vorhergehenden Ansprüche, **dadurch gekennzeichnet, dass** die ersten Teilchen in rasterförmiger Anordnung auf dem Träger aufgebracht sind.

14. Sicherheitsmerkmal nach Anspruch 13, **dadurch gekennzeichnet, dass** hierdurch Bildinformationen wiedergegeben werden.

15. Wert- und Sicherheitsdokument mit einem Sicherheitsmerkmal nach einem der vorhergehenden Ansprüche.

## Claims

1. A safety feature for a valuable and security document comprising first particles, which encompass at least one arbitrary color in response to the visual observation in reflected light and which, in transmitted light, encompass a second color, which differs from the at least one first color, **characterized in that** the safety feature encompasses second particles in addition to the first particles, wherein the first particles and the second particles show at least one arbitrary color in response to the visual observation in reflected light and the first particles encompass a different color in response to the observation in transmitted light than the second particles in transmitted light.

2. The safety feature according to claim 1, **characterized in that** the first particles and the second particles have the same first color in reflected light.

3. The safety feature according to one of the preceding claims, **characterized in that** the first particles show a chromatic color in reflected light.

4. The safety feature according to one of the preceding claims, **characterized in that** the first particles appear to be grey or black in transmitted light.

5. The safety feature according to one of claims 1 to 4, **characterized in that** the first and the second particles are arranged on the surface of a support.

6. The safety feature according to claim 5, **characterized in that** the support is at least partially transparent in at least one area.

7. The safety feature according to one of claims 5 or 6, **characterized in that** the first and the second particles are applied to the support by means of printing and/or spraying and/or coating and/or plating.

8. The safety feature according to one of claims 1 to 7, **characterized in that** the first and the second particles are covered by a transparent protective coating.

9. The safety feature according to one of the preceding claims, **characterized in that** the first particles encompass an opaque core.

10. The safety feature according to claim 9, **characterized in that** the opaque core consists of soot.

11. The safety feature according to one of the preceding claims, **characterized in that** a surface of the safety feature, which is embodied by means of the first particles or by means of the first and the second particles, displays information in response to the visual observation in transmitted light.

12. The safety feature according to claim 11, **characterized in that** the information includes a sequence of letters and/or numerals and/or an image and/or a shape.

13. The safety feature according to one of the preceding claims, **characterized in that** the first particles are applied to the support arranged in a grid-like configuration.

14. The safety feature according to claim 13, **characterized in that** image information is reproduced by it.

15. A valuable and safety document comprising a safety feature according to one of the preceding claims.

## Revendications

1. Caractéristique de sécurité pour un document de valeur et de sécurité comprenant des premières particules, qui présentent lors de l'examen visuel en lumière réfléchie au moins une couleur quelconque et en lumière transmise une seconde couleur différente au moins d'une première couleur, **caractérisée en ce que** la caractéristique de sécurité présente en supplément des premières particules des secondes particules, les premières particules et les secondes particules présentant lors de l'examen visuel en lumière réfléchie au moins une couleur quelconque, et les premières particules présentant lors de l'examen visuel en lumière transmise une autre couleur que les secondes particules en lumière transmise.

2. Caractéristique de sécurité selon la revendication 1, **caractérisée en ce que** les premières particules et les secondes particules présentent en lumière réfléchie la même première couleur.

3. Caractéristique de sécurité selon l'une quelconque des revendications précédentes, **caractérisée en ce que** les premières particules présentent une couleur bigarrée en lumière réfléchie.

4. Caractéristique de sécurité selon l'une quelconque des revendications précédentes, **caractérisée en ce que** les premières particules paraissent grises ou noires en lumière transmise.

5. Caractéristique de sécurité selon l'une quelconque des revendications 1 à 4, **caractérisée en ce que** les premières et les secondes particules sont disposées sur la surface d'un support.

6. Caractéristique de sécurité selon la revendication 5, **caractérisée en ce que** le support est au moins semi-transparent au moins dans une zone.

7. Caractéristique de sécurité selon l'une quelconque des revendications 5 ou 6, **caractérisée en ce que** les premières et les secondes particules sont appliquées sur le support par impression et/ou pulvérisation et/ou enduction et/ou revêtement.

8. Caractéristique de sécurité selon l'une quelconque des revendications 1 à 7, **caractérisée en ce que** les premières et les secondes particules sont recouvertes par une couche de protection transparente.

9. Caractéristique de sécurité selon l'une quelconque des revendications précédentes, **caractérisée en ce que** les premières particules présentent un noyau opaque.

10. Caractéristique de sécurité selon la revendication 9, **caractérisée en ce que** le noyau opaque est à base de suie.

11. Caractéristique de sécurité selon l'une quelconque des revendications précédentes, **caractérisée en ce qu'**une information est représentée, lors de l'examen visuel en lumière transmise, par une surface, formée par les premières particules ou les premières et les secondes particules, de la caractéristique de sécurité.

12. Caractéristique de sécurité selon la revendication 11, **caractérisée en ce que** l'information contient une succession de lettres et/ou de chiffres et/ou une image et/ou une forme.

13. Caractéristique de sécurité selon l'une quelconque des revendications précédentes, **caractérisée en ce que** les premières particules sont appliquées dans un agencement en forme de trame sur le support.

14. caractéristique de sécurité selon la revendication 13, **caractérisée en ce que** des informations d'image sont ainsi reproduites.

15. Document de valeur et de sécurité comprenant une caractéristique de sécurité selon l'une quelconque des revendications précédentes.
